# EUROPÄISCHE PATENTANMELDUNG

(11) **EP 4 397 467 A1**
(43) Veröffentlichungstag der Anmeldung: **10.07.2024**
(21) Anmeldenummer: 23217331.0
(22) Anmeldetag: 15.12.2023
(51) Int. Cl.: B29C 44/34, B29B 7/60, B29B 7/74, B29C 44/46

(54) **VERFAHREN UND VORRICHTUNG ZUR KONTINUIERLICHEN PRODUKTION VON POLYURETHAN-BLOCKSCHAUM**

(30) Priorität: 06.01.2023 DE 102023100258
(71) Anmelder: Hennecke GmbH, 53757 Sankt Augustin (DE)
(72) Erfinder: Walterscheid, Thomas, 53819 Neunkirchen-Seelscheid (DE); Ermel, Frank, 56317 Linkenbach (DE)
(74) Vertreter: Gosdin, Carstensen & Partner Patentanwälte Partnerschaftgesellschaft mbB

(57) **Zusammenfassung**

Die Erfindung betrifft ein Verfahren zur kontinuierlichen Produktion von Polyurethan-Blockschaum (1), bei dem mehrere unterschiedliche chemische Komponenten (2, 3, 4, 5) einzeln dosiert und anschließend einer Mischkammer (6) zugeführt werden, in der sie zu einem Polyurethan-Reaktivgemisch vermischt und anschließend auf eine kontinuierlich bewegte Trennbahn (7) ausgetragen werden, wobei das Reaktivgemisch anschließend aufschäumt und zu einem kontinuierlichen Strang aus Polyurethanschaum ausreagiert, wobei der Strom zumindest einer Komponente (3) mittels eines Mengenteilers (8) in mindestens zwei zumindest annähernd gleich große Teil-Mengenströme (3a, 3b, 3c) aufgeteilt wird, wobei die Teil-Mengenströme (3a, 3b, 3c) dann jeweils einzeln in die Mischkammer (6) eingespritzt werden. Um eine möglichst homogene Schaumstruktur im Blockschaum zu erzeugen, sieht das Verfahren erfindungsgemäß vor, dass in mindestens einer Leitung (12c) für einen Teil-Mengenstrom (3c) ein schaltbares Ventil (13) angeordnet ist, mittels dem wahlweise der Teil-Mengenstrom (3c) der Mischkammer (6) oder über eine Rücklaufleitung (14) dem Zulauf zum Mengenteiler (8) zugeführt wird. Des Weiteren betrifft die Erfindung eine Vorrichtung zur kontinuierlichen Produktion von Polyurethan-Blockschaum.

## Beschreibung

Die Erfindung betrifft ein Verfahren zur kontinuierlichen Produktion von Polyurethan-Blockschaum, bei dem mehrere unterschiedliche chemische Komponenten einzeln dosiert und anschließend einer Mischkammer zugeführt werden, in der sie zu einem Polyurethan-Reaktivgemisch vermischt und anschließend auf eine kontinuierlich bewegte Trennbahn ausgetragen werden, wobei das Reaktivgemisch anschließend aufschäumt und zu einem kontinuierlichen Strang aus Polyurethanschaum ausreagiert, wobei der Strom zumindest einer Komponente mittels eines Mengenteilers in mindestens zwei zumindest annähernd gleich große Teil-Mengenströme aufgeteilt wird, wobei die Teil-Mengenströme dann jeweils einzeln in die Mischkammer eingespritzt werden. Des Weiteren betrifft die Erfindung eine Vorrichtung zur kontinuierlichen Produktion von Polyurethan-Blockschaum.

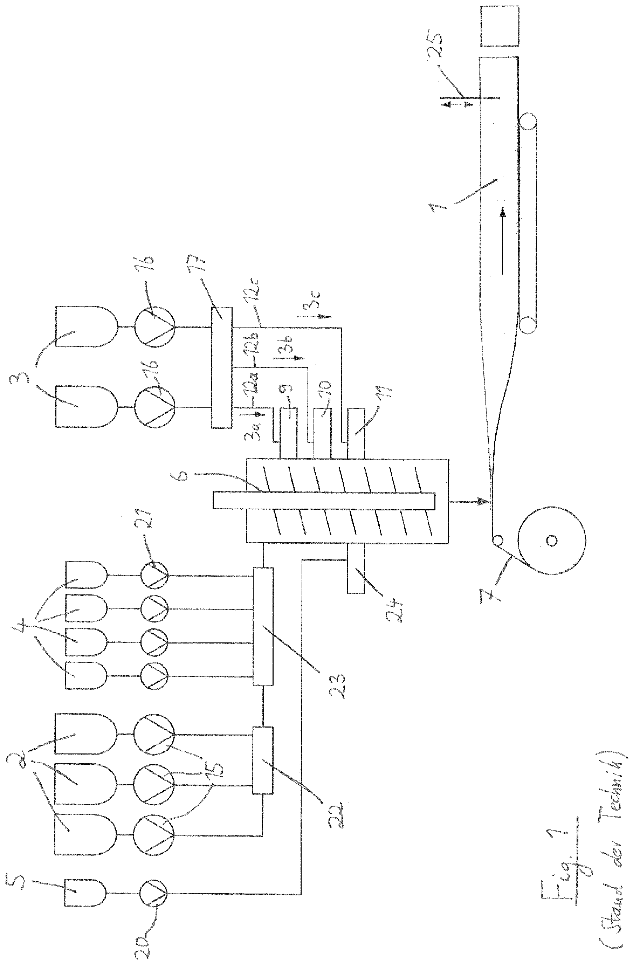

Ein gattungsgemäßes Verfahren offenbart die US 2021/0308906 A1. Hier wird ein von einer Dosierpumpe geförderter Strom einer Reaktionskomponente in zwei parallele Ströme aufgeteilt (s. den Mengenteiler 19 in Figur 1 des Dokuments), welche dann separat in eine Mischkammer eingespritzt werden.

Bei der kontinuierlichen Produktion von Polyurethan-Blockschaum werden verschiedene flüssige chemische Komponenten dosiert in einem vorgegebenen Mischungsverhältnis einer Mischkammer (d. h. einem Mischorgan) zugeführt, in dieser miteinander vermischt und anschließend auf eine kontinuierlich bewegte Trennbahn ausgetragen. Anschließend schäumt das ausgetragene Reaktivgemisch auf und härtet aus, so dass ein Quasi-Endlos-Strang aus Polyurethanschaum entsteht, der dann in Blöcke definierter Länge geschnitten wird.

Ein anderes Verfahren ist aus der EP 3 695 945 A1 bekannt. Weitere ähnliche Lösungen zeigen die DE 22 41 198 A und die DE 10 2005 054 153 A1.

Die Reaktivmischung enthält in der Regel zumindest eine PolyolKomponente, eine Isocyanat-Komponente sowie mehrere Additive. Alle diese chemischen Komponenten werden in der Regel mittels Dosierpumpen dosiert und dem Mischer zugeführt, wobei es gegebenenfalls vorteilhaft sein kann, bestimmte Komponenten vor dem Eintritt in das eigentliche Mischorgan miteinander zu vermischen.

Insbesondere ist es bei den Isocyanat-haltigen Komponenten üblich, diese vor dem Eintritt in die Mischkammer zu einem Isocyanat-Gemisch zu vereinen und dann über mehrere Düsen in den Mischbereich zu injizieren. Dies erleichtert einerseits die Mischaufgabe und bewirkt andererseits, dass es beim Eintrag über mehrere Düsen zu einer besseren Nukleierung kommt. Unter Nukleierung ist hier das Erzeugen kleiner Mikroblasen zu verstehen, die als Keimzellen für das im weiteren Reaktionsverlauf freigesetzte Treibgas dienen. Die Mikroblasen werden erzeugt, da im Düsenspalt der statische Druck aufgrund der hohen Geschwindigkeiten so stark abgesenkt wird, dass die im Isocyanat gelöste Luft oder der gelöste Stickstoff zumindest teilweise in Form von Mikroblasen freigesetzt wird. Zum diesbezüglichen Stand der Technik wird auf die genannte EP 3 695 945 A1 Bezug genommen.

Der gesamte Isocyanat-Strom wird also auf mehrere Teil-Ströme aufgeteilt, wobei jeder dieser Ströme eine Gleichdruckdüse passiert; der Druck wird dabei per Feder, per Pneumatik oder per Hydraulik oder aus einer Kombination dieser Möglichkeiten eingestellt (Prinzip der Konstantdruckdüse). Die Verwendung solcher Konstantdruckdüsen ist bekannt, wozu auf die EP 2 023 025 A2 Bezug genommen wird. Solche Düsen bieten den Vorteil, dass damit über einen relativ großen Durchflussmengenbereich ein nahezu konstanter Druck eingestellt werden kann.

Es hat sich gezeigt, dass es schwierig ist sicherzustellen, dass mehrere parallel geschaltete Düsen mit der gleichen Menge durchströmt werden, wenn ein Mengenstrom auf mehrere Düsen aufgeteilt wird (eine solche Lösung nach dem Stand der Technik zeigt Fig. 1).

Selbst wenn die Düsen vorab sorgfältig auf den gleichen Druck eingestellt werden, kann eine Düse im Laufe der Zeit schwergängiger werden, so dass sich an den einzelnen Düsen unterschiedliche Öffnungsquerschnitte einstellen und dementsprechend dann auch unterschiedliche Mengen durch die Düse strömen.

Die Düsen besitzen in der Regel reibungsbehaftete Dichtungen zwischen dem beweglichen Düsenzapfen und dem stationären Düsengehäuse, wodurch Slip-Stick-Effekte entstehen, die bewirken, dass der Zapfen sich jeweils nur bewegt, wenn eine Mindestkraft auf ihn einwirkt, die so groß ist, dass die Haftreibungskräfte überwunden werden. Auf die grundsätzliche Problematik der Reibkräfte in solchen Gleichdruckdüsen wird auch in der DE 10 2018 104 209 B3 näher eingegangen.

Bei einem gattungsgemäßen Verfahren ergibt sich daraus die unerwünschte Konsequenz, dass sich bei parallel durchströmten Düsen deutlich unterschiedliche Spalte einstellen können und folglich deutlich unterschiedliche Mengenströme durch die parallel geschalteten Düsen strömen. Dadurch kann es zu einer unregelmäßigen Schaumstruktur kommen, da so beim Durchströmen ein unterschiedliches Spektrum an Mikroblasen entstehen kann und als Folge im späteren Schaum Bereiche mit unterschiedlich großen Zellen entstehen. Außerdem kann dieser Effekt auch zu Vermischungsstörungen führen, insbesondere, wenn beispielsweise durch eine der Düsen nur ein sehr kleiner Mengenstrom fließt.

Im Lichte der vorstehend beschriebenen Problematik liegt der vorliegenden Erfindung die **Aufgabe** zugrunde, ein gattungsgemäßes Verfahren sowie eine entsprechende Vorrichtung bereitzustellen, mit dem bzw. mit der es möglich ist, eine möglichst homogene Schaumstruktur im Blockschaum zu erzeugen, was ohne aufwändige Mittel und damit kostengünstig ermöglicht werden soll.

Die **Lösung** dieser Aufgabe durch die Erfindung ist verfahrensgemäß dadurch gekennzeichnet, dass in mindestens einer Leitung für einen Teil-Mengenstrom ein schaltbares Ventil angeordnet ist, mittels dem wahlweise der Teil-Mengenstrom der Mischkammer oder über eine Rücklaufleitung dem Zulauf zum Mengenteiler zugeführt wird.

Der Strom der zumindest einen Komponente kann dabei ein einzeln dosierter Komponenten-Strom sein. Alternativ ist es allerdings auch möglich, dass der Strom der zumindest einen Komponente eine Mischung aus mehreren verschiedenen dosierten Komponenten-Strömen ist.

Der Strom der zumindest einen Komponente ist bevorzugt ein Isocyanat-Strom.

Die Teil-Mengenströme werden bevorzugt mittels Düsen in die Mischkammer eingespritzt.

Demgemäß kann erfindungsgemäß zwecks Erweiterung der Einsatzmöglichkeiten des gegenständlichen Verfahrens über besagtes Ventil wahlweise entweder die fluidische Verbindung zwischen dem Ausgang des Mengenteilers und der Düse offengehalten werden, während die fluidische Verbindung zwischen dem Ausgang des Mengenteilers zum Zulauf zum Mengenteiler (insbesondere zu einem Verteilerblock) über die Rücklaufleitung verschlossen wird oder umgekehrt die fluidische Verbindung zwischen dem Ausgang des Mengenteilers und der Düse verschlossen werden, während die fluidische Verbindung zwischen dem Ausgang des Mengenteilers zum Zulauf zum Mengenteiler (insbesondere zum Verteilerblock) über die Rücklaufleitung offengehalten wird.

Die vorgeschlagene Vorrichtung zur kontinuierlichen Produktion von Polyurethan-Blockschaum umfasst mindestens eine Pumpe zur Dosierung einer Polyol-haltigen Komponente, mindestens eine Pumpe zur Dosierung einer Isocyanat-haltigen Komponente, eine Mischkammer zur Mischung der Polyol-haltigen und der Isocyanat-haltigen Komponente und mindestens zwei Düsen zur Injektion der mindestens einen Komponente in die Mischkammer, wobei ein Mengenteiler angeordnet ist, der mindestens einen der von der Pumpe geförderten Komponenten-Mengenströme in mindestens zwei zumindest annähernd gleich große Teil-Mengenströme aufteilen kann, wobei separate Leitungen vom Mengenteiler zu den Düsen führen. Erfindungsgemäß ist die Vorrichtung dadurch gekennzeichnet, dass in mindestens einer Leitung für einen Teil-Mengenstrom ein schaltbares Ventil angeordnet ist, mittels dem wahlweise der Teil-Mengenstrom der Mischkammer oder über eine Rücklaufleitung dem Zulauf zum Mengenteiler zugeführt werden kann.

Dabei kann ein Verteilerblock in Förderrichtung der Komponente vor dem Mengenteiler angeordnet sein, wobei der Verteilerblock mit der mindestens einen Pumpe in fluidischer Verbindung steht.

Die Rücklaufleitung mündet dabei bevorzugt in den Verteilerblock.

Der Mengenteiler kann dabei aus mehreren miteinander kämmenden Zahnradpaaren bestehen, wobei jeweils mindestens eines der Zahnräder der Zahnradpaare mittels einer gemeinsamen Welle miteinander drehfest verbunden sind. Die gemeinsame Welle ist dabei bevorzugt frei von einem Antrieb. Die Anzahl der Zahnradpaare entspricht dabei der gewünschten Anzahl der Teil-Mengenströme, in welche der gesamte Mengenstrom aufgeteilt werden soll. Dabei wird das Prinzip des an sich bekannten Zahnradzählers genutzt, mittels dessen eine Durchström-Menge bzw. ein Durchström-Volumen an Medium das Zahnradpaar in eine entsprechende Drehung versetzt. Werden, wie erfindungsgemäß bevorzugt vorgesehen, mehrere Zahnräder der jeweiligen Zahnradpaare über eine gemeinsame Welle miteinander verbunden, hat dies zwangsläufig zur Folge, dass durch sämtliche Zahnradpaare derselbe Teil-Mengenstrom bzw. Teil-Volumenstrom fließt und so eine gleiche Aufteilung des gesamten Mengenstroms in Teilströme erfolgt.

Unter einem Mengenteiler ist vorliegend insbesondere ein hydraulisches Bauteil zu verstehen, welches einen eintretenden Mengenstrom in mehrere annähernd gleichgroße Mengenströme aufteilt. Ein möglicher geeigneter Mengenteiler in Form eines Zahnradstromteilers besitzt mehrere Zahnradpaare, wobei die Zahnradpaare ähnlich wie bei einer Zahnradpumpe das einströmende Material in den Zwischenräumen der Zahnflanken von einer Eingangsseite zu einer Ausgangsseite transportieren. Die Zahnradpaare sind über eine gemeinsame Welle miteinander verbunden. Anders als eine Pumpe besitzt der Mengenteiler jedoch keinen Antriebsmotor. Die Zahnradpaare werden vielmehr durch den eintretenden Volumenstrom angetrieben. Bei symmetrisch gleichen Zahnradpaaren in symmetrisch gleichen Gehäuseaussparungen ergibt sich automatisch, dass der eintretende Volumenstrom in mehrere annähernd gleich große Volumenströme aufgeteilt wird.

Wie beschrieben besteht eine spezielle Ausführungsform der Erfindung darin, dass von einem oder von mehreren Leitungssträngen zwischen dem Mengenteiler und den Düsen jeweils eine Rücklaufleitung zurück in den Sammelblock bzw. in den Vorlauf eines Verteilerblocks führt. Ein Ventil, beispielsweise in Form eines Drei-Wege-Hahns oder alternativ in Form zweier einzelner Hähne oder Ventile, sorgt dafür, dass wahlweise die Leitung zur Düse geöffnet ist, während die Rücklaufleitung verschlossen ist oder dass umgekehrt die Leitung zur Düse verschlossen wird und die Rücklaufleitung geöffnet ist. Diese Ausgestaltung ermöglicht es, die Anzahl der Düsen in Abhängigkeit von der Isocyanat-Durchflussmenge zu variieren. Dies ist besonders vorteilhaft, da die Düsen zumeist nur in einem bestimmten Mengenbereich optimal arbeiten.

In den Zeichnungen sind Ausführungsbeispiele der Erfindung dargestellt.
- Fig. 1: zeigt schematische eine Vorrichtung zur kontinuierlichen Produktion von Polyurethan-Blockschaum nach dem Stand der Technik,
- Fig. 2: zeigt die Vorrichtung gemäß Fig. 1 nach einer nicht erfindungsgemäßen Ausführungsform,
- Fig. 3: zeigt eine Variante der Vorrichtung gemäß Fig. 2 mit einer erfindungsgemäßen Rücklaufleitung für einen Teil-Mengenstrom an Isocyanat, wobei die Rücklaufleitung gesperrt ist,
- Fig. 4: zeigt die Variante gemäß Fig. 3, wobei die Rücklaufleitung geöffnet ist,
- Fig. 5: zeigt schematisch in einer anderen Ausführungsform die erfindungsgemäße Zuleitung von Isocyanat in die Mischkammer, wobei dies über vier freigegebene Düsen erfolgt,
- Fig. 6: zeigt in der Darstellung gemäß Fig. 5 die Zuleitung von Isocyanat, wobei eine der Düsen gesperrt ist, und
- Fig. 7: zeigt in der Darstellung gemäß Fig. 5 die Zuleitung von Isocyanat, wobei zwei der Düsen gesperrt sind.

In Figur 1 ist zunächst eine vorbekannte Vorrichtung zur kontinuierlichen Produktion von Polyurethan-Blockschaum dargestellt. Es gilt, dass die hier verwendeten Bezugszeichen auch auf die späteren Figuren analog Anwendung finden, d. h. die insoweit zum Stand der Technik beschriebenen Merkmale sind auch bei der erfindungsgemäßen Lösung vorgesehen.

In mehreren Vorratsbehältern sind verschiedene Polyole 2 und verschiedene Isocyanate 3 enthalten, gleichermaßen auch verschiedene Additive 4 und 5. Diese Komponenten werden mittels Pumpen 15, 16, 20 und 21 gefördert und zu einer Mischkammer 6 geleitet, wo sie mittels Düsen 9, 10, 11 und 24 eingespritzt und so miteinander vermischt werden.

Sowohl für die Polyole 2 als auch für die Isocyanate 3 und die Additive 4 gilt, dass die verschiedenen Teil-Komponenten in Verteilerblöcke 22, 17 und 23 eingebracht und von dort aus zur Mischkammer 6 gefördert werden.

Die Anzahl der Additive, die in den Polyol-Strom bzw. die direkt in die Mischkammer 6 injiziert werden, kann beliebig variieren und hängt von den verwendeten Rohstoffen ab. Ebenso kann die Anzahl der Polyole und Isocyanate variieren.

Das in der Mischkammer 6 vermischte Reaktivgemisch wird auf eine mit konstanter Geschwindigkeit geförderte Trennbahn 7 ausgebracht, schäumt auf und härtet zum Polyurethan-Blockschaum 1 auf. So entsteht ein kontinuierlich bewegter Strang aus Polyurethan-Schaum, der dann mittels einer Schneidvorrichtung 25 in einzelne Blöcke definierter Länge geschnitten wird.

Die im Verteilerblock 17 enthaltenen Isocyanate 3 werden über separate Leitungen 12a, 12b und 12c mit jeweiligen Teil-Mengenströmen 3a, 3b und 3c zu den Düsen 9, 10 und 11 gefördert und in die Mischkammer 6 eingespritzt, wobei zur diesbezüglichen vorbekannten Vorgehensweise auf die obigen Ausführungen Bezug genommen wird.

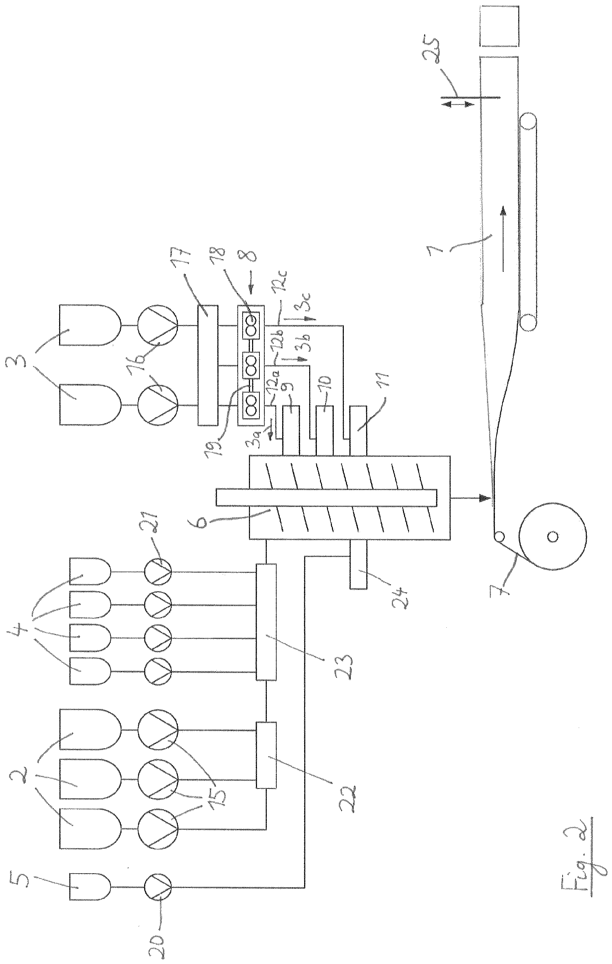

In Figur 2 ist eine nicht erfindungsgemäße Ausführungsform einer Vorrichtung skizziert, wobei für die bereits genannten Komponenten gemäß Figur 1 dieselben Ausführungen gelten.

### Unterschiede bestehen in Folgendem:

In Förderrichtung hinter dem Verteilerblock 17 für Isocyanat 3 ist ein Mengenteiler 8 angeordnet. Dieser teilt den in den Mengenteiler 8 eintretenden Volumenstrom im Ausführungsbeispiel gemäß Figur 2 in drei gleiche Teil-Mengenströme 3a, 3b und 3c.

Wie in Figur 2 hierzu angedeutet, umfasst der Mengenteiler 8 drei Zahnradpaare 18, wobei jeweils ein Zahnrad jedes Zahnradpaares 18 mittels einer gemeinsamen Welle 19 mit einem korrespondierenden Zahnrad drehfest verbunden ist. Es können auch beide Zahnräder eines Zahnradpaares 18 mit jeweiligen gemeinsamen Wellen 19 miteinander verbunden sein.

Der hiermit erzielte Effekt ist, dass der Mengen- bzw. Volumenstrom an Isocyanat 3, welcher den Verteilerblock 17 verlässt, in drei gleiche Teile aufgeteilt wird, welche dann über die Düsen 9, 10 und 11 in die Mischkammer 6 eingespritzt werden. Somit kann eine über die Zeit gleichbleibende Teilmenge sichergestellt werden, die über die jeweilige Düse in die Mischkammer 6 eingespritzt wird. In der Folge zeichnet sich der produzierte Polyurethan-Schaum durch ein hohes Maß an Homogenität auf.

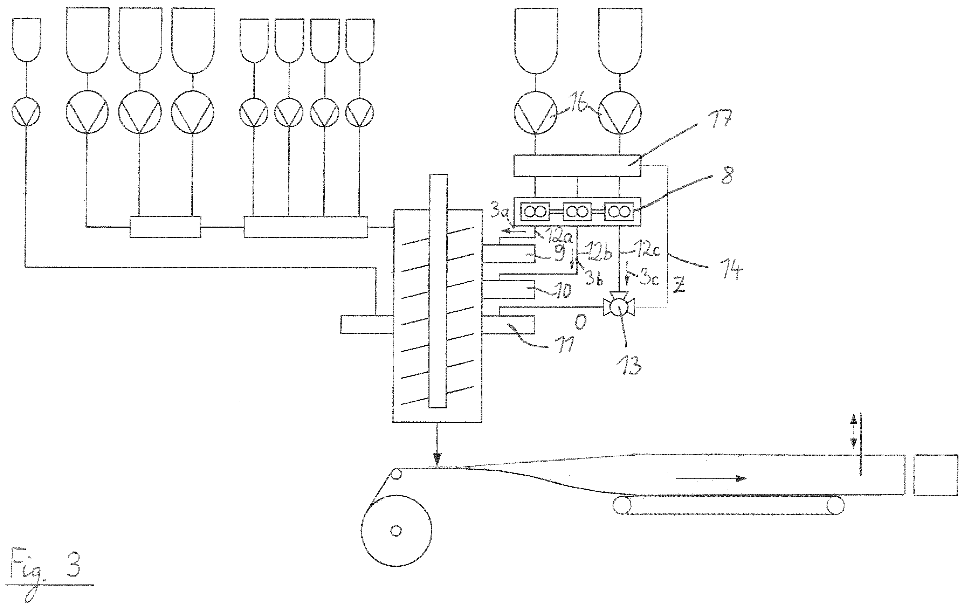

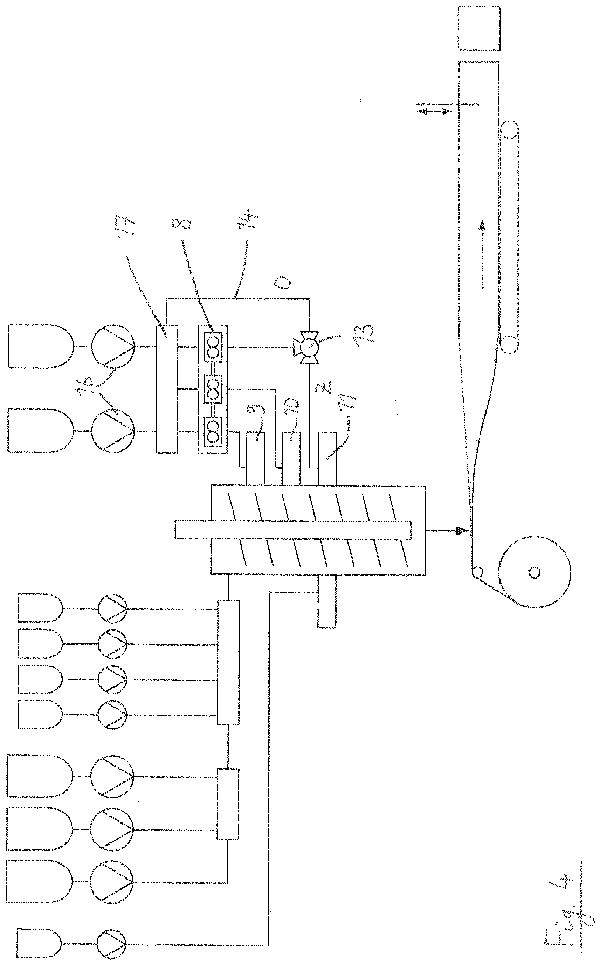

In den Figuren 3 und 4 ist eine erfindungsgemäße Fortbildung der Lösung nach Figur 2 skizziert. Ergänzend ist hier eine Rücklaufleitung 14 vorgesehen, die von der Leitung 12c abzweigt, wobei ein schaltbares Ventil 13 zur Steuerung des Medienflusses vorgesehen ist. Abhängig von der Schaltung des Ventils 13 gelangt der Teil-Mengenstrom 3c entweder zur Düse 11 (d. h. Betrieb wie in Figur 2) oder alternativ in die Rücklaufleitung 14, von der der Teil-Mengenstrom 3c zurück in den Verteilerblock 17 geführt wird.

In Figur 3 ist die erstgenannte Situation dargestellt, d. h. die Leitung für den Teil-Mengenstrom 3c führt zur Düse 11 (s. "O" für geöffnete Leitung), während die Rücklaufleitung 14 geschlossen ist (s. "Z" für geschlossene Leitung). Indes zeigt Figur 4 den anderen Fall, d. h. die Leitung zur Düse 11 ist verschlossen und der Teil-Mengenstrom 3c wird zum Verteilerblock 17 zurückgeleitet.

Demgemäß erlaubt die in den Figuren 3 und 4 dargestellte Vorrichtung die wahlweise Verwendung von zwei (9, 10) oder drei (9, 10, 11) Düsen. Das vorzugsweise als Drei-Wege-Hahn ausgebildete Ventil 13 gibt die Leitung vom Verteilerblock 17 in die Düse 11 frei und versperrt gleichzeitig die Rücklaufleitung 14 in den Verteilerblock 17, wie es Figur 3 zeigt, oder es versperrt, gemäß Figur 4, die Leitung vom Verteilerblock 17 in die Düse 11 und schaltet gleichzeitig die Rücklaufleitung 14 in den Verteilerblock 17 frei.

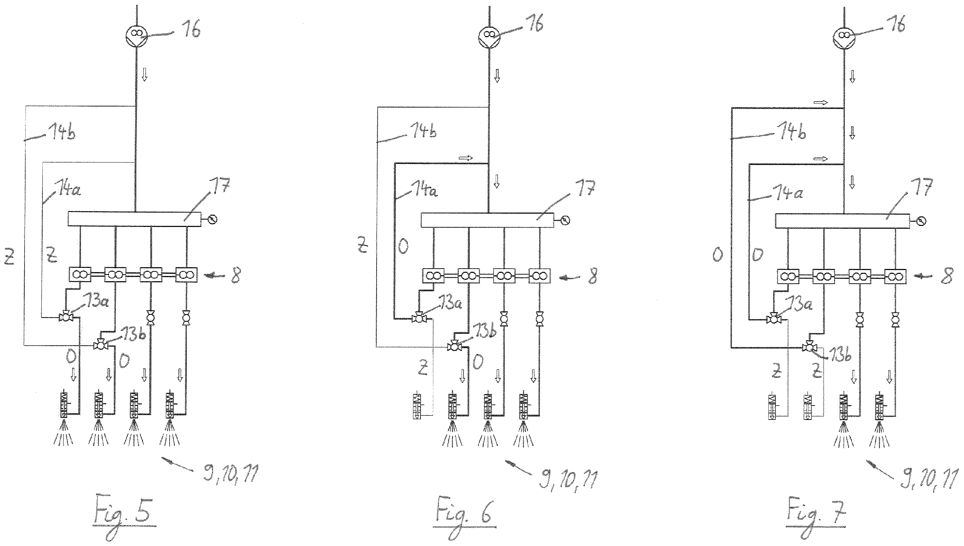

In den Figuren 5, 6 und 7 ist das Konzept gemäß den Figuren 3 und 4 noch weiter ausgebaut. Hier sind jetzt vier Düsen 9, 10, 11 für das Einspritzen von Isocyanat vorgesehen, wobei zwei Rücklaufleitungen 14a und 14b vorhanden sind und wobei der Fluss - entweder zu den Düsen oder in die Rücklaufleitung - durch entsprechende schaltbare Ventile 13a und 13b gesteuert wird.

In Figur 5 sind alle vier Düsen 9, 10, 11 freigegeben, d. h. das Polyol gelangt, von der Pumpe 16 gefördert, in den Verteilerblock 17 und von dort in den Mengenteiler 8. Von dort aus werden die Teil-Mengenströme zu den vier Düsen geleitet und in die Mischkammer eingespritzt. Die Ventile 13a und 13b schalten demgemäß die Leitung zu den Düsen auf "O" (offen), während die Rücklaufleitungen 14a, 14b auf "Z" geschaltet sind (zu).

Figur 6 zeigt den Fall, dass der Betrieb auf das Einspritzen von drei Düsen 9, 10, 11 umgestellt wurde. Demgemäß hat das Ventil 13a nun die Leitung vom Mengenteiler 8 zur Düse gesperrt ("Z") und die Rücklaufleitung 14a freigegeben (O"). Indes befindet sich der Fließweg, in dem sich das Ventil 13b befindet, in derselben Stellung wie in Figur 5.

Als Konsequenz vergrößert sich der Mengenstrom in den Verteilerblock 17 in Folge des Teil-Mengenstroms der verschlossenen Düse, der über die Rücklaufleitung 14a rückgeführt wird Der Mengenteiler 8 teilt diesen eintretenden Mengenstrom wieder in vier gleich große Ströme auf, so dass ausgangsseitig durch jeden Ast jeweils 1/3 des ursprünglich dosierten Mengenstromes strömt. Folglich wird jede der nun eingesetzten drei Düsen mit einem Drittel des ursprünglich dosierten Mengenstroms versorgt. Die vierte Düse bleibt verschlossen und wird nicht durchströmt.

Gemäß Figur 7 ist der Betrieb nun auf das Einspritzen von nur zwei Düsen umgestellt. Beide Ventile 13a und 13b haben den Fluss zur jeweiligen Düse unterbrochen und leiten die entsprechenden Teil-Mengenströme in die Rücklaufleitungen 14a und 14b.

Die Rücklaufleitungen 14a und 14b führen das Medium zurück und fördern es wiederum in den Verteilerblock 17.

Als Konsequenz erhöht sich der Mengenstrom in den Verteilerblock 17 entsprechend. Der Mengenteiler 8 teilt diesen eintretenden Mengenstrom wieder in vier gleich große Ströme auf, so dass ausgangsseitig durch jeden Ast jeweils die halbe Menge des ursprünglich dosierten Mengenstromes strömt. Folglich wird jede der nun eingesetzten zwei Düsen mit der Hälfte des ursprünglich dosierten Mengenstroms versorgt.

Somit ist es durch die Ausgestaltung gemäß der Figuren 5 bis 7 möglich, in Abhängigkeit der Schaltung der Ventile 13a, 13b die Anzahl der verwendeten Düsen von zwei bis vier Düsen zu variieren.

### Bezugszeichenliste:

- 1: Polyurethan-Blockschaum
- 2, 3, 4, 5: chemische Komponenten
- 2: Polyol
- 3: Isocyanat
- 3a: Teil-Mengenstrom
- 3b: Teil-Mengenstrom
- 3c: Teil-Mengenstrom
- 4: Additiv
- 5: Additiv
- 6: Mischkammer
- 7: Trennbahn
- 8: Mengenteiler
- 9: Düse
- 10: Düse
- 11: Düse
- 12a: Leitung
- 12b: Leitung
- 12c: Leitung
- 13: schaltbares Ventil (Drei-Wege-Hahn)
- 13a: schaltbares Ventil (Drei-Wege-Hahn)
- 13b: schaltbares Ventil (Drei-Wege-Hahn)
- 14: Rücklaufleitung
- 14a: Rücklaufleitung
- 14b: Rücklaufleitung
- 15: Pumpe für Polyol
- 16: Pumpe für Isocyanat
- 17: Verteilerblock für Isocyanat
- 18: Zahnradpaar
- 19: gemeinsamen Welle
- 20: Pumpe für Additiv
- 21: Pumpe für Additiv
- 22: Verteilerblock für Polyol
- 23: Verteilerblock für Additive
- 24: Düse für Additiv
- 25: Schneidvorrichtung

- O: offen
- Z: zu

## Patentansprüche

1. Verfahren zur kontinuierlichen Produktion von Polyurethan-Blockschaum (1), bei dem mehrere unterschiedliche chemische Komponenten (2, 3, 4, 5) einzeln dosiert und anschließend einer Mischkammer (6) zugeführt werden, in der sie zu einem Polyurethan-Reaktivgemisch vermischt und anschließend auf eine kontinuierlich bewegte Trennbahn (7) ausgetragen werden, wobei das Reaktivgemisch anschließend aufschäumt und zu einem kontinuierlichen Strang aus Polyurethan-schaum ausreagiert, wobei der Strom zumindest einer Komponente (3) mittels eines Mengenteilers (8) in mindestens zwei zumindest annähernd gleich große Teil-Mengenströme (3a, 3b, 3c) aufgeteilt wird, wobei die Teil-Mengenströme (3a, 3b, 3c) dann jeweils einzeln in die Mischkammer (6) eingespritzt werden,
**dadurch gekennzeichnet,**
**dass** in mindestens einer Leitung (12c) für einen Teil-Mengenstrom (3c) ein schaltbares Ventil (13) angeordnet ist, mittels dem wahlweise der Teil-Mengenstrom (3c) der Mischkammer (6) oder über eine Rücklaufleitung (14) dem Zulauf zum Mengenteiler (8) zugeführt wird.

2. Verfahren nach Anspruch 1, **dadurch gekennzeichnet, dass** der Strom der zumindest einen Komponente (3) ein einzeln dosierter Komponenten-Strom ist.

3. Verfahren nach Anspruch 1, **dadurch gekennzeichnet, dass** der Strom der zumindest einen Komponente (3) eine Mischung aus mehreren verschiedenen dosierten Komponenten-Strömen ist.

4. Verfahren nach einem der Ansprüche 1 bis 3, **dadurch gekennzeichnet, dass** der Strom der zumindest einen Komponente (3) ein Isocyanat-Strom ist.

5. Verfahren nach einem der Ansprüche 1 bis 4, **dadurch gekennzeichnet, dass** die Teil-Mengenströme (3a, 3b, 3c) mittels Düsen (9, 10, 11) in die Mischkammer (6) eingespritzt werden.

6. Vorrichtung zur kontinuierlichen Produktion von Polyurethan-Blockschaum (1), umfassend
- mindestens eine Pumpe (15) zur Dosierung einer Polyol-haltigen Komponente,
- mindestens eine Pumpe (16) zur Dosierung einer Isocyanat-haltigen Komponente,
- eine Mischkammer (6) zur Mischung der Polyol-haltigen und der Isocyanat-haltigen Komponente,
- mindestens zwei Düsen (9, 10, 11) zur Injektion der mindestens einen Komponente in die Mischkammer (6),
wobei ein Mengenteiler (8) angeordnet ist, der mindestens einen der von der Pumpe (15, 16) geförderten Komponenten-Mengenströme in mindestens zwei zumindest annähernd gleich große Teil-Mengenströme (3a, 3b, 3c) aufteilen kann, wobei separate Leitungen (12a, 12b, 12c) vom Mengenteiler (8) zu den Düsen (9, 10, 11) führen,
**dadurch gekennzeichnet, dass**
in mindestens einer Leitung (12c) für einen Teil-Mengenstrom (3c) ein schaltbares Ventil (13) angeordnet ist, mittels dem wahlweise der Teil-Mengenstrom (3c) der Mischkammer (6) oder über eine Rücklaufleitung (14) dem Zulauf zum Mengenteiler (8) zugeführt werden kann.

7. Vorrichtung nach Anspruch 6, **dadurch gekennzeichnet, dass** ein Verteilerblock (17) in Förderrichtung der Komponente vor dem Mengenteiler (8) angeordnet ist, wobei der Verteilerblock (17) mit der mindestens einen Pumpe (16) in fluidischer Verbindung steht.

8. Vorrichtung nach Anspruch 7, **dadurch gekennzeichnet, dass** die Rücklaufleitung (14) in den Verteilerblock (17) mündet.

9. Vorrichtung nach einem der Ansprüche 6 bis 8, **dadurch gekennzeichnet, dass** der Mengenteiler (8) aus mehreren miteinander kämmenden Zahnradpaaren (18) besteht, wobei jeweils mindestens eines der Zahnräder der Zahnradpaare (18) mittels einer gemeinsamen Welle (19) miteinander drehfest verbunden sind.

10. Vorrichtung nach Anspruch 9, **dadurch gekennzeichnet, dass** die gemeinsame Welle (19) frei von einem Antrieb ist.
